# FASCICULE DE BREVET EUROPEEN

(11) **EP 3 767 376 B1**
(45) Date de publication et mention de la délivrance du brevet: **29.09.2021**
(21) Numéro de dépôt: 20186360.2
(22) Date de dépôt: 17.07.2020
(51) Int. Cl.: G02F 1/025

(54) **MODULATEUR OPTIQUE CAPACITIF**
KAPAZITIVER OPTISCHER MODULATOR
CAPACITIVE OPTICAL MODULATOR

(30) Priorité: 19.07.2019 FR 1908189
(43) Date de publication de la demande: 20.01.2021
(73) Titulaire: STMicroelectronics (Crolles 2) SAS, 38920 Crolles (FR)
(72) Inventeur: BOEUF, Frederic, 38420 LE VERSOUD (FR); BARRERA, Cyrille, 38100 GRENOBLE (FR)
(74) Mandataire: Cabinet Beaumont

(56) Documents cités:
- US-A1- 2018 074 349
- TAKENAKA MITSURU ET AL: "III-V/Si Hybrid MOS Optical Phase Modulator for Si Photonic Integrated Circuits", 2018 EUROPEAN CONFERENCE ON OPTICAL COMMUNICATION (ECOC), IEEE, 23 septembre 2018 (2018-09-23), pages 1-3, XP033447468, DOI: 10.1109/ECOC.2018.8535176
- BOEUF FREDERIC ET AL: "Challenges in Silicon Photonics Process Technology", 2017 EUROPEAN CONFERENCE ON OPTICAL COMMUNICATION (ECOC), IEEE, 17 septembre 2017 (2017-09-17), pages 1-3, XP033336576, DOI: 10.1109/ECOC.2017.8346203
- MITSURU TAKENAKA ET AL: "Heterogeneous CMOS Photonics Based on SiGe/Ge and III-V Semiconductors Integrated on Si Platform", IEEE JOURNAL OF SELECTED TOPICS IN QUANTUM ELECTRONICS., vol. 23, no. 3, 1 mai 2017 (2017-05-01), pages 64-76, XP055673135, US ISSN: 1077-260X, DOI: 10.1109/JSTQE.2017.2660884

## Description

### Domaine technique

La présente description concerne de façon générale les circuits intégrés électro-optiques, et plus particulièrement un modulateur électro-optique capacitif de tels circuits.

### Technique antérieure

On connaît du document Mitsuru Takenaka " III-V/Si Hybrid MOS Optical Phase Modulator for Si Photonic Integrated Circuits " 2018 European conference on Optical communication, des modulateurs électro-optiques capacitifs hybrides de type III-V/silicium, ou III-V/Si. Dans de tels modulateurs, une bande d'une couche de silicium est revêtue, sur au moins une partie de sa longueur, d'une bande d'une couche de matériaux III-V séparées l'une de l'autre par une couche isolante. L'empilement de la bande de silicium, de la couche isolante et de la bande de matériau III-V définit un guide d'onde dont la direction longitudinale correspond à la direction longitudinale des bandes. En outre, les deux bandes correspondent à deux électrodes d'une capacité. En appliquant une tension aux bornes de cette capacité, l'accumulation de charges qui en résulte de chaque côté de la couche isolante disposée entre les deux bandes permet de moduler l'indice optique effectif du guide d'onde, donc de moduler un signal optique s'y propageant. Résumé de l'invention

Il existe un besoin de pallier tout ou partie des inconvénients des modulateurs électro-optiques capacitifs intégrés hybrides de type III-V/Si connus, et des procédés de fabrication de ces modulateurs connus.

Un mode de réalisation pallie tout ou partie des inconvénients des modulateurs électro-optiques capacitifs intégrés hybrides de type III-V/Si connus.

En particulier, un mode de réalisation prévoit un modulateur électro-optique capacitif hybride de type III-V/Si dans lequel on peut choisir l'épaisseur de la bande de silicium et de la bande de matériaux III-V, notamment une épaisseur de la bande de silicium qui soit inférieure à l'épaisseur d'une couche de silicium sur isolant d'un circuit intégré comprenant le modulateur.

Un autre mode de réalisation prévoit un procédé de fabrication d'un modulateur électro-optique capacitif intégré hybride de type III-V/Si qui pallie tout ou partie des inconvénients des procédés de fabrication connus d'un tel modulateur.

En particulier, un mode de réalisation prévoit un procédé de fabrication d'un modulateur électro-optique capacitif hybride de type III-V/Si dans lequel on peut choisir l'épaisseur de la bande de silicium et de la bande de matériaux III-V, notamment une épaisseur de la bande de silicium qui soit inférieure à l'épaisseur d'une couche de silicium sur isolant d'un circuit intégré comprenant le modulateur.

Un mode de réalisation prévoit un procédé comprenant les étapes successives suivantes : a) graver une cavité dans une première couche de silicium en laissant en place, au fond de la cavité, une deuxième couche de silicium correspondant à une partie de l'épaisseur de la première couche ; b) faire croître dans ladite cavité, par épitaxie à partir de la deuxième couche, une troisième couche de germanium ou de silicium-germanium ; c) faire croître dans ladite cavité, par épitaxie à partir de la troisième couche, une quatrième couche de silicium de manière à remplir ladite cavité ; d) définir par gravure jusqu'à la deuxième couche une première bande dans la quatrième couche et une deuxième bande dans la troisième couche, la première bande reposant sur la deuxième bande et ayant une même largeur que la deuxième bande ; e) graver sélectivement une partie de la deuxième bande de manière à réduire la largeur de la deuxième bande ; f) remplir d'un isolant des cavités disposées de part et d'autre des première et deuxième bandes ; g) déposer une couche isolante ; et h) coller, par collage moléculaire, une couche de matériaux III-V sur la couche isolante.

Selon un mode de réalisation, la gravure de l'étape d) est une gravure anisotrope.

Selon un mode de réalisation, la gravure de l'étape e) est une gravure isotrope.

Selon un mode de réalisation, l'étape f) comprend les étapes suivantes : f1) déposer une couche dudit isolant remplissant lesdites cavités ; et f2) effectuer une planarisation mécano-chimique, CMP, jusqu'à la première couche.

Selon un mode de réalisation, à l'étape h), la couche de matériaux III-V a une épaisseur sensiblement égale, de préférence égale, à celle de la première bande.

Selon un mode de réalisation, la couche de matériaux III-V est en InGaAsP ou en InP, de préférence en InGaAsP.

Selon un mode de réalisation, la première bande, la couche isolante et la couche de matériau III-V forment un modulateur électro-optique capacitif.

Selon un mode de réalisation, la couche isolante est en HfO₂, Al₂O₃ et/ou en SiO₂, de préférence en Al₂O₃.

Selon un mode de réalisation, la troisième couche est en silicium-germanium avec une concentration en atomes de germanium comprise entre 10 et 20%.

Selon un mode de réalisation, la première couche est une couche de type silicium sur isolant, SOI, et repose sur une couche isolante.

Un autre mode de réalisation prévoit un modulateur électro-optique capacitif comprenant : une première couche de silicium ; un empilement d'une première bande de germanium ou de silicium-germanium reposant sur la première couche et d'une deuxième bande de silicium reposant sur la première bande, la première bande étant moins large que la deuxième bande ; un isolant bordant latéralement l'empilement et affleurant une face supérieure de la deuxième bande ; une couche isolante reposant sur l'isolant et la deuxième bande ; et une couche de matériaux III-V reposant sur la couche isolante et comprenant une troisième bande disposée au-dessus et en regard de la deuxième bande.

Selon un mode de réalisation, la première bande, la troisième bande et une portion de la couche isolante prise entre les première et troisième bandes forment un guide d'onde du modulateur électro-optique.

Selon un mode de réalisation, la première couche est une partie de l'épaisseur d'une deuxième couche de silicium d'une structure de silicium sur isolant, SOI, la première couche reposant sur une couche isolante de la structure SOI et la deuxième bande affleurant une face supérieure de la deuxième couche.

Selon un mode de réalisation, les deuxième et troisième bandes ont une épaisseur sensiblement égale, de préférence égale.

Selon un mode de réalisation : la première bande est en silicium-germanium avec une concentration en atomes de germanium comprise entre 10 et 20% ; et/ou la couche de matériaux III-V est en InGaAsP ou en InP, de préférence en InGaAsP ; et/ou la couche isolante est en HfO₂, Al₂O₃ et/ou en SiO₂, de préférence en Al₂O₃.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
[Fig. 1] la figure 1 est une vue schématique et en coupe illustrant une étape d'un mode de réalisation d'un procédé de fabrication d'un modulateur électro-optique capacitif hybride de type III-V/Si ;
[Fig. 2] la figure 2 est une vue schématique et en coupe illustrant des étapes d'un mode de réalisation d'un procédé de fabrication d'un modulateur électro-optique capacitif hybride de type III-V/Si ;
[Fig. 3] la figure 3 est une vue schématique et en coupe illustrant d'autres étapes d'un mode de réalisation d'un procédé de fabrication d'un modulateur électro-optique capacitif hybride de type III-V/Si ;
[Fig. 4] la figure 4 est une vue schématique et en coupe illustrant d'autres étapes d'un mode de réalisation d'un procédé de fabrication d'un modulateur électro-optique capacitif hybride de type III-V/Si ;
[Fig. 5] la figure 5 est une vue schématique et en coupe illustrant d'autres étapes d'un mode de réalisation d'un procédé de fabrication d'un modulateur électro-optique capacitif hybride de type III-V/Si ;
[Fig. 6] la figure 6 est une vue schématique et en coupe illustrant une variante de réalisation des étapes de la figure 3 ; et
[Fig. 7] la figure 7 est une vue schématique et en coupe illustrant la mise en oeuvre, après l'étape de la figure 6, des étapes des figures 4 et 5.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les circuits intégrés opto-électoniques et les applications dans lesquels peut être prévu un modulateur tel que décrit n'ont pas été détaillés, les modulateurs décrits étant compatibles avec les circuits et les applications usuels.

Sauf précision contraire, lorsque l'on fait référence à deux éléments connectés électriquement entre eux, cela signifie directement connectés électriquement sans éléments intermédiaires autres que des conducteurs, et lorsque l'on fait référence à deux éléments reliés ou couplés électriquement entre eux, cela signifie que ces deux éléments peuvent être connectés électriquement ou être reliés ou couplés électriquement par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Sauf précision contraire, une première couche ou une première portion de couche reposant sur une deuxième couche ou une deuxième portion de couche signifie que la première couche ou portion de couche repose sur et en contact avec la deuxième couche ou portion de couche.

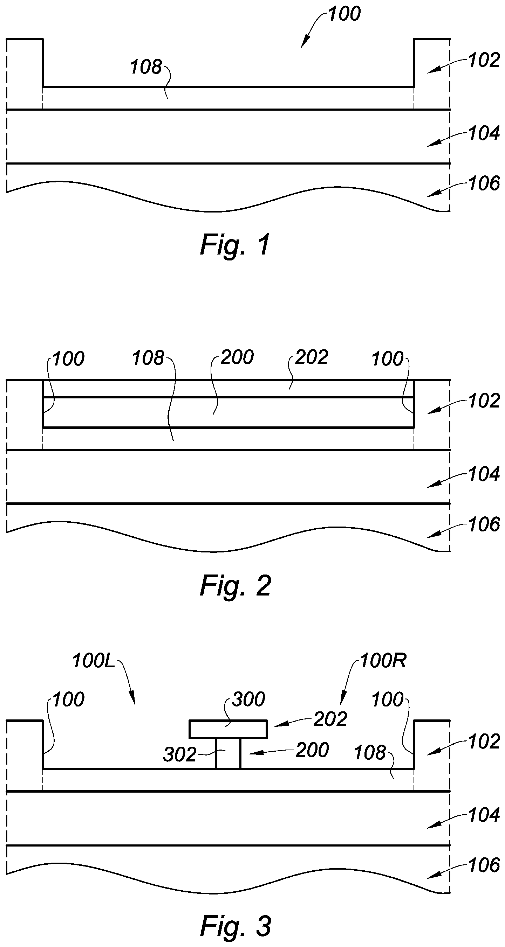

Un mode de réalisation d'un procédé de fabrication d'un modulateur électro-optique capacitif intégré hybride de type III-V/Si va maintenant être décrit en relation avec les figures 1, 2, 3, 4 et 5, ces figures étant des vues en coupe illustrant des étapes du procédé. Les vues en coupe des figures 1 à 5 sont prises dans un plan de coupe orthogonale à une direction de propagation d'un signal optique dans le modulateur, par exemple un signal dont la ou les longueurs d'onde sont dans le proche infrarouge, par exemple comprises entre 1 et 2 µm, de préférence égales à environ 1,3 µm ou environ 1,55 µm, par exemple à 1,3 µm ou 1,55 µm.

La figure 1 illustre une étape d'un mode de réalisation d'un procédé de fabrication d'un modulateur électro-optique capacitif hybride de type III-V/Si.

A cette étape, une cavité 100 a été gravée dans une couche de silicium 102. La couche 102 est de préférence de type silicium sur isolant ou SOI ("Silicon On Insulator"), c'est-à-dire qu'elle repose sur une couche isolante 104, par exemple en oxyde de silicium, reposant elle-même sur un substrat 106 de support, par exemple en silicium.

La cavité 100 est gravée sur une partie seulement de l'épaisseur de la couche 102, de sorte que l'autre partie de l'épaisseur de la couche 102 reste en place sur la couche 104, au fond de la cavité 100. Autrement dit, une couche 108 de silicium est laissée en place au fond de la cavité 100, cette couche 108 correspondant à la partie de l'épaisseur de la couche 100 laissée en place au fond de la cavité 100. L'épaisseur de la couche 108 est par exemple déterminée par le temps de gravure.

A titre d'exemple, l'épaisseur de la couche 102 est environ égale à 300 nm, par exemple égale à 300 nm. L'épaisseur de la couche 108 est par exemple comprise entre 30 et 100 nm, par exemple environ égale à 50 nm, de préférence égale à 50 nm.

De préférence, bien que cela ne soit pas visible en figure 1, la cavité s'étend longitudinalement dans la direction de propagation d'un signal optique dans le modulateur, c'est-à-dire ici dans une direction orthogonale au plan de la figure 1. A titre d'exemple, en vue de dessus non représentée, la cavité a une forme rectangulaire.

A titre d'exemple, la largeur de la cavité 100, par exemple mesurée dans une direction orthogonale à la direction de propagation d'un signal dans le modulateur et parallèle à la surface supérieure de la couche 108, est comprise entre 2 et 5 pm, par exemple environ égale à 3,5 µm, de préférence égale à 3,5 µm.

Bien que cela ne soit pas représenté en figure 1, un masque de gravure est déposé sur la couche 102 préalablement à la gravure de la cavité 100, le masque de gravure de la cavité 100 comprenant une ouverture débouchant sur la couche 102, à l'emplacement de la cavité 100.

La figure 2 illustre des étapes d'un mode de réalisation d'un procédé de fabrication d'un modulateur électro-optique capacitif hybride de type III-V/Si, et plus particulièrement des étapes réalisées après l'étape de la figure 1.

A ces étapes, une couche 200 en germanium ou en silicium-germanium, par exemple en silicium-germanium avec une concentration en atomes de germanium comprise entre 10 et 20 %, a été formée dans la cavité 100, sur toute la couche 108. De préférence, la couche 200 est formée par épitaxie à partir de la couche 108, et, plus généralement, à partir des surfaces exposées du silicium de la couche 100 comprenant la couche 108.

L'épaisseur de la couche 200 est inférieure à la profondeur de la cavité 100 gravée à l'étape de la figure 1. Autrement dit, le niveau de la face supérieure de la couche 200 est en dessous du niveau de face supérieure de la couche 102.

A titre d'exemple, l'épaisseur de la couche 200 est comprise entre 50 et 150 nm, par exemple entre 80 et 120 nm, par exemple égale à environ 100 nm, de préférence égale à 100 nm.

Une couche 202 de silicium est ensuite formée, dans la cavité 100, sur toute la couche 200. La couche 202 est de préférence formée par épitaxie à partir de la couche 202.

L'épaisseur de la couche 202 est choisie de sorte que la cavité 100 soit remplie des couches 200 et 202. De préférence, l'épaisseur de la couche 202 est choisie de sorte que sa face supérieure affleure la face supérieure de la couche 102.

Selon un mode de réalisation, la couche 202 est formée directement avec l'épaisseur désirée.

Selon un autre mode de réalisation, la couche 202 est formée avec une épaisseur supérieure à l'épaisseur désirée, et une étape de planarisation mécano-chimique, ou CMP ("Chemical Mechanical Polishing"), est ensuite effectuée pour ramener la couche 202 à l'épaisseur désirée.

A titre d'exemple, l'épaisseur de la couche 202 est comprise entre 100 et 200 nm, par exemple entre 125 et 175 nm, par exemple environ égale à 150 nm, de préférence égale à 150 nm.

Bien que cela ne soit pas représenté en figure 2, de préférence, aux étapes de la figure 2, le masque de gravure de la cavité 100 est laissé en place sur la couche 102.

La figure 3 illustre des étapes d'un mode de réalisation d'un procédé de fabrication d'un modulateur électro-optique capacitif hybride de type III-V/Si, et plus particulièrement des étapes réalisées après les étapes de la figure 2.

En figure 3, une partie des couches 200 et 202 est retirée par gravure jusqu'à la couche 108. Cette gravure est mise en oeuvre de manière à définir une première bande 300 de silicium dans la couche 202, et une deuxième bande 302 de germanium ou de silicium-germanium dans la couche 200, les bandes 300 et 302 correspondant à des portions des couches respectives 202 et 200.

Bien que cela ne soit pas visible en figure 3, les bandes 300 et 302 s'étendent en longueur dans la direction de propagation d'un signal optique dans le modulateur, d'un bout à l'autre de la cavité 100 prise dans le sens de sa longueur. L'empilement des bandes 300 et 302 est alors bordé latéralement, sur toute sa longueur, par deux cavités 100L et 100R disposées respectivement de part et d'autre de l'empilement. Ces cavités 100L et 100R correspondent à des parties respectives de la cavité 100.

La gravure pour définir les bandes 300 et 302 est de préférence une étape de gravure anisotrope. Cette gravure est par exemple mise en oeuvre après la formation d'un masque de gravure reposant sur la couche 202, au-dessus et en vis-à-vis des futures bandes 300 et 302. De préférence, lors de la définition des bandes 300 et 302, le masque de gravure de la cavité 100 est laissé en place.

Après la gravure pour définir les bandes 300 et 302, bien que cela ne soit pas illustré ici, la bande 300 de silicium repose entièrement sur la bande 302 de germanium ou de silicium-germanium. Autrement dit, toute la face inférieure de la bande 300 est en contact de toute la face supérieure de la bande 302. Dit encore autrement, les bandes 300 et 302 ont une même largeur et des bords alignés.

En figure 3, après avoir défini par gravure les bandes 300 et 302 dans les couches respectives 202 et 200, la largeur de la bande 302 est diminuée par rapport à celle de la bande 300.

Pour cela, une étape de gravure sélective du matériau de la bande 302 par rapport à celui de la bande 300 est mise en oeuvre. Cette étape de gravure est une gravure isotrope. A titre d'exemple, la diminution de la largeur de la bande 302 est déterminée par le temps de gravure. De préférence, lors de cette gravure, le masque de gravure de la cavité 100 et/ou le masque de gravure pour définir les bandes 300 et 302 sont laissés en place.

Après avoir réduit la largeur de la bande 302 par rapport à celle de la bande 300, comme cela est représenté en figure 3, la bande 300 comprend une partie ou bande centrale reposant sur la bande 302, et deux parties ou bandes latérales suspendues, de part et d'autre de la bande 302.

A titre d'exemple, la largeur de la bande 300 est comprise entre 300 nm et 5 µm, par exemple entre 350 et 550 nm, par exemple environ égale à 450 nm, de préférence égale à 450 nm. La largeur de la bande 302, après réduction de sa largeur par gravure, est par exemple comprise entre 25 et 100 nm, par exemple entre 25 et 75 nm, par exemple égale à environ 50 nm, de préférence égale à 50 nm.

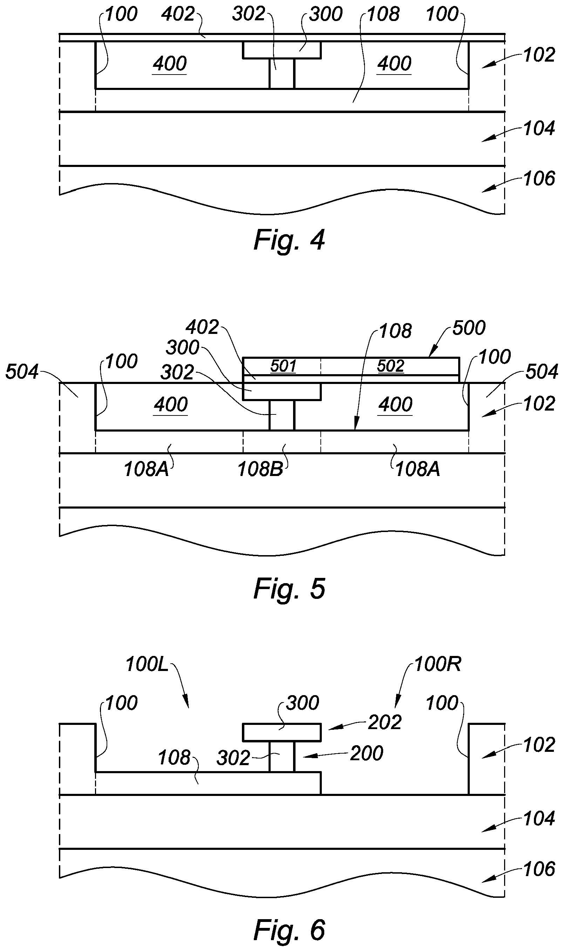

La figure 4 illustre des étapes d'un mode de réalisation d'un procédé de fabrication d'un modulateur électro-optique capacitif hybride de type III-V/Si, et plus particulièrement des étapes réalisées après les étapes de la figure 3.

A ces étapes, la cavité 100, et plus exactement les cavités 100L et 100R (figure 3) disposées de part et d'autre de l'empilement des bandes 300 et 302, sont remplies d'un isolant 400, par exemple de l'oxyde de silicium, par exemple du même matériau isolant que celui de la couche 104.

Cette étape de remplissage des cavités 100L et 100R est mise en oeuvre de sorte que la face supérieure de l'isolant 400, la face supérieure de la bande 300 et la face supérieure de la couche 102 soient au même niveau. Dit autrement, l'isolant 400 affleure la face supérieure de la couche 102 et la face supérieure de la bande 300.

Selon un mode de réalisation, une couche d'isolant 400 est déposée sur toute la structure avec une épaisseur supérieure ou égale à la profondeur de la cavité 100, donc des cavités 100L et 100R, de manière à remplir entièrement les cavités 100L et 100R. Une étape de planarisation mécano-chimique ou CMP ("Chemical Mechanical Polishing") jusqu'à la face supérieure de la couche 102 est ensuite mise en oeuvre.

De préférence, le masque de gravure de la cavité 100 (étape de la figure 1) et le masque de gravure pour définir les bandes 300 et 302 (étape de la figure 3) sont retirés préalablement au remplissage des cavités 100R et 100L par l'isolant 400.

Une couche isolante 402 est ensuite déposée sur la face supérieure plane de la structure, c'est-à-dire sur la face supérieure de la couche 102, la face supérieure de la bande 300 et la face supérieure de l'isolant 400. La couche 402 est destinée à former l'isolant entre deux électrodes d'une capacité du modulateur, cette capacité permettant de moduler un signal optique se propageant dans le modulateur lorsqu'une tension est appliquée entre ses deux électrodes.

A titre d'exemple, la couche 402 a une épaisseur comprise entre 5 et 15 nm, par exemple environ égale à 10 nm, de préférence égale à 10 nm. Plus généralement, l'épaisseur de la couche 402 est par exemple adaptée en fonction de l'application visée, par exemple égale à environ 5 nm, de préférence égale à 5 nm, pour un fonctionnement basse tension, ou par exemple égale à environ 15 nm, de préférence égale à 15 nm, pour un fonctionnement à des fréquences élevées de l'ordre de 35 GHz.

A titre d'exemple, la couche 402 est constituée d'une ou plusieurs couches isolantes, par exemple en HfO₂, Al₂O₃ et/ou SiO₂, de préférence d'une unique couche en Al₂O₃. De préférence, la couche 402 est, au moins du côté de sa face supérieure, en un matériau choisi pour permettre le collage moléculaire d'une couche de matériau III-V sur la couche 402.

La figure 5 illustre des étapes d'un mode de réalisation d'un procédé de fabrication d'un modulateur électro-optique capacitif hybride de type III-V/Si, et plus particulièrement des étapes réalisées après les étapes de la figure 4.

En figure 5, une couche 500 d'un matériau III-V a été collée sur la couche 402, par collage moléculaire. En d'autres termes, la couche 500 a été reportée sur la couche 402.

Selon un mode de réalisation, l'épaisseur de la couche 500 avant d'être collée à la couche 402 est déjà sensiblement égale, de préférence égale, à l'épaisseur de la bande 300.

Selon un autre mode de réalisation, l'épaisseur de la couche 500 avant d'être collée à la couche 402 est supérieure à celle de la bande 300, et l'étape de collage ou report de la couche 500 sur la couche 402 est alors suivie d'une étape de gravure ou de CMP pour réduire l'épaisseur de la couche 500 jusqu'à une épaisseur sensiblement égale, de préférence égale, à l'épaisseur de la bande 300.

A titre d'exemple, l'épaisseur de la bande 300 est par exemple comprise entre 100 et 200 nm, par exemple environ égale à 150 nm, de préférence égale à 150 nm.

En outre, en figure 5, une fois la couche 500 collée sur la couche 402 et mise, le cas échéant, à l'épaisseur désirée, une partie de la couche 500 est retirée par gravure jusqu'à la couche 402. La gravure est éventuellement poursuivie sur toute l'épaisseur de la couche 402, de manière à retirer les portions de la couche 402 exposées suite à la gravure de la couche 500.

La partie de la couche 500 laissée en place comprend une première portion ou bande 501 disposée au-dessus et en vis-à-vis de la bande 300. Dit autrement, les bords des bandes 501 et 300 sont alignés. La partie de la couche 500 laissée en place comprend en outre une deuxième portion ou bande 502 s'étendant latéralement à partir de la bande 501. Les deux bandes 501 et 502 sont délimitées par des traits pointillés en figure 5. De préférence, la bande 502 est uniquement en regard de l'isolant 400.

Dans la structure ou modulateur illustré par la figure 5, la bande 300, la bande 501 de la couche 500 et la portion ou bande de couche 402 intercalée entre les bandes 300 et 501 constituent le guide d'onde du modulateur. Ce guide d'onde est apte à propager de manière guidée un signal optique à moduler.

La bande 300 est au contact de la bande 302, elle-même au contact de la couche 108, la couche 108 étant au contact de portions 504 de la couche 102 bordant latéralement la cavité 100 prise dans le sens de sa longueur, ces portions 504 n'ayant pas été gravées lors de l'étape de la figure 1. Bien que cela ne soit pas illustré ici, les portions 504 de la couche 102 sont reliées électriquement à une première borne d'application d'une tension du modulateur. Les portions 504, la couche 108 et les bandes 302 et 300 constituent alors une première électrode de la capacité du modulateur.

Les portions 504, la couche 108 et les bandes 302 et 300 sont dopées d'un premier type de conductivité, par exemple de type P.

Les bandes 501 et 502 de la couche 500 sont en contact l'une avec l'autre. Une portion de la bande 502, de préférence disposée du côté opposé à la bande 501, est reliée électriquement à une deuxième borne d'application d'une tension du modulateur. La couche 500 constitue alors une deuxième électrode de la capacité du modulateur

La couche 500 est dopée du deuxième type de conductivité, par exemple de type N.

Dans le modulateur de la figure 5, lorsqu'une tension non nulle est appliquée entre les première et deuxième bornes du modulateur, des charges s'accumulent dans la bande 501, respectivement 300, le long de la bande de couche 402 en contact avec les bandes 501 et 300. Il en résulte une modification correspondante de l'indice optique du guide d'onde du modulateur, donc une modulation du signal se propageant dans le guide d'onde du modulateur.

Un avantage du modulateur illustré en figure 5 est que les deux bandes 300 et 502 ont la même épaisseur ce qui permet que le mode optique du signal à moduler soit centré sur la bande de couche 402 intercalée entre les bandes 300 et 501, là où l'accumulation de charges est maximale. Il en résulte une meilleure modulation que si ce mode optique était décentré par rapport à la bande de couche 402 intercalée entre les bandes 300 et 501, comme ce serait par exemple le cas dans un modulateur où les bandes 300 et 501 n'auraient pas la même épaisseur.

En outre, dans le modulateur de la figure 5, l'épaisseur des bandes 300 et 501 est différente de celle de la couche 102, sans qu'il soit nécessaire d'augmenter l'épaisseur de la couche 402. Plus généralement, dans le modulateur de la figure 5, l'épaisseur des bandes 300 et 501 et l'épaisseur de la couche 402 peuvent être choisies pour obtenir une section transversale du guide d'onde du modulateur qui corresponde à un confinement donné du mode optique du signal à moduler, de préférence un confinement maximal de ce mode optique dans le guide d'onde. Dit autrement, les épaisseurs peuvent être choisies pour augmenter, de préférence maximiser, le recouvrement entre le mode optique du signal à moduler et des portions des bandes 300 et 501 où s'accumulent des charges ou porteurs libres. Il en résulte une augmentation de l'efficacité de la modulation de ce mode optique.

De plus, l'épaisseur de la couche 402 peut être choisie indépendamment de l'épaisseur des bandes 300 et 501, de manière à optimiser le fonctionnement du modulateur.

Ces avantages du modulateur de la figure 5 résultent notamment du procédé de fabrication de ce modulateur, décrit en relation avec les figures 1 à 5. En effet, ce procédé permet en particulier de choisir l'épaisseur des bandes 300 et 501, ainsi que celle de la couche 402, tout en conservant, à l'étape de la figure 4, une couche 402 ayant une face supérieure plane permettant de coller ou reporter la couche 500 de matériau III-V sur la couche 402.

Bien que cela ne soit pas illustré, le procédé décrit précédemment peut comprendre une étape supplémentaire de gravure partielle de la couche 500, et plus particulièrement d'une portion de la bande 502 s'étendant depuis la bande 501 jusqu'à une portion de bande 502 reliée électriquement à la deuxième borne d'application d'une tension de modulation. Cela permet d'améliorer encore le confinement du mode optique du signal à moduler dans le guide d'onde du modulateur.

Selon un aspect d'un mode de réalisation, les niveaux de dopage dans les diverses couches, régions, portions, bandes du modulateur de la figure 5 peuvent être adaptés pour optimiser le fonctionnement du modulateur. A titre d'exemple :
- les portions 504 sont dopées avec un premier niveau de dopage, par exemple compris entre 5.10¹⁹ at.cm⁻³ et 5.10²⁰ at.cm⁻³, de préférence égal à 10²⁰ at.cm⁻³ ;
- des premières bandes 108A de la couche 108 s'étendant latéralement depuis les portions 504 jusqu'à une deuxième bande 108B de la couche 108 comprenant une partie centrale disposée sous et en en vis-à-vis des bandes 300 et 501, sont dopées avec un deuxième niveau de dopage inférieur au premier niveau de dopage, par exemple un deuxième niveau de dopage compris entre 10¹⁹ at.cm⁻³ et 10²⁰ at.cm⁻³, de préférence égal à 5.10¹⁹ at.cm⁻³ ;
- la bande 108A, la bande 302 et la bande 300 sont dopées avec un troisième niveau de dopage inférieur au deuxième niveau de dopage, par exemple un troisième niveau de dopage compris entre 5.10¹⁸ at.cm⁻³ et 5.10¹⁶ at.cm⁻³, de préférence égal à 5.10¹⁷ at.cm⁻³ ;
- la bande 501 et, de préférence, une portion de la bande 502 s'étendant latéralement à partir de la bande 501, sont dopées avec le troisième niveau de dopage ;
- une portion centrale de la bande 502 est dopée avec le deuxième niveau de dopage ; et
- une portion latérale de la bande 502, disposée du côté opposée à la bande 501, est dopée avec le troisième niveau de dopage.

Les portions et les bandes dopées avec le premier niveau de dopage sont situées suffisamment loin du guide d'onde du modulateur pour être dopées avec le premier niveau de dopage élevé, sans toutefois perturber la propagation et la modulation d'un signal dans le guide d'onde. Le premier niveau de dopage élevé permet de réduire la résistivité de ces portions et de ces bandes, donc d'augmenter la fréquence de coupure du modulateur.

La mise en oeuvre des étapes de dopage, avec les niveaux désirés, les diverses régions, bandes, parties, portions, couches du modulateur de la figure 5 est à la portée de l'homme du métier.

La façon dont le guide d'onde du modulateur est relié, connecté ou couplé optiquement à un premier guide d'onde en silicium défini dans la couche 102 et fournissant le signal optique à moduler, et à un deuxième guide d'onde en silicium défini dans la couche 102 et recevant le signal modulé, n'est pas détaillée et est à la portée de l'homme du métier. Notamment, l'homme du métier est en mesure de réaliser ce couplage optique entre les premier et deuxième guides d'onde et le guide d'onde du modulateur de manière à assurer une variation progressive d'indice optique effectif, par exemple en faisant varier de manière appropriée la largeur des premier et deuxième guides d'onde en silicium et la largeur des bandes 302, 300, 501 et/ou 502.

La figure 6 est une vue schématique et en coupe illustrant une variante de réalisation des étapes de la figure 3.

Dans cette variante, en plus des étapes décrites en relation avec la figure 3, on prévoit une étape de gravure supplémentaire, de préférence une gravure anisotrope, pour supprimer la partie de la couche 108 disposée d'un côté de l'empilement des bandes 302 et 300 prises dans le sens de leur longueur, à droite dans l'exemple de la figure 6.

Pour cela, après avoir défini les bandes 300 et 302 à partir des couches 200 et 202, et avant ou après, de préférence avant, la réduction de la largeur de la bande 302 par rapport à celle de la bande 300, un masque de gravure supplémentaire est formé sur la partie de la couche 108 à laisser en place. Dit encore autrement, le masque supplémentaire est formé sur la portion de la couche 108 constituant le fond d'une des cavités 100L et 100R, la cavité 100R dans l'exemple de la figure 6.

De préférence, à cette étape, le masque de gravure de la cavité 100 et le masque de gravure pour définir les bandes 300 et 302 sont laissés en place, le masque de gravure supplémentaire chevauchant alors ces deux masques et reposant sur la partie de la couche 108 à laisser en place.

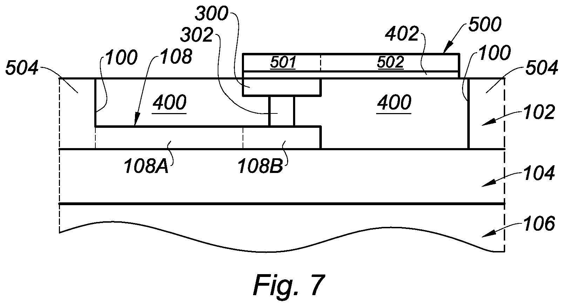

La figure 7 est une vue schématique et en coupe illustrant le modulateur obtenu après la mise en oeuvre des étapes des figures 4 et 5 à partir de la structure décrite en relation avec la figure 6.

Dans cette variante, par rapport à ce qui a été décrit en relation avec la figure 5, lors de l'étape de gravure de la couche 500 pour ne laisser en place qu'une bande 501 au-dessus de la bande 300 et une bande 502 s'étendant latéralement à partir de la bande 501, la bande 502 est de préférence disposée du côté de la bande 501 où la couche 108 a été retirée par gravure lors de l'étape décrite en relation avec la figure 6. De préférence, comme cela est représenté en figure 7, et de manière similaire à ce qui a été décrit en relation avec la figure 5, la bande 502 est uniquement en regard de l'isolant 400. En outre, la portion 504 de la couche 102 bordant latéralement la cavité 100 du côté de la bande 502, c'est-à-dire la portion 504 disposée à droite en figure 7, peut ne pas être reliée ou connectée à la première borne d'application d'une tension du modulateur. Cette portion 504 (à droite en figure 7) peut être disposée plus loin de la bande 300 que l'autre portion 504 (à gauche en figure 7), par exemple pour éviter de former une capacité parasite entre la portion 504 bordant latéralement la cavité 100 du côté de la bande 502 (portion 504 à droite en figure 7) et la bande 502.

Les inventeurs ont constaté que le modulateur de la figure 5 ou de la figure 7 permettait d'atteindre des fréquences de modulation supérieures à 30 GHz, voire supérieures à 35 GHz, par exemple sensiblement égale à 40 GHz, notamment quand le modulateur a les dimensions et les niveaux de dopage préférés indiqués précédemment.

Divers modes de réalisation et variantes ont été décrits. L'homme de l'art comprendra que certaines caractéristiques de ces divers modes de réalisation et variantes pourraient être combinées, et d'autres variantes apparaitront à l'homme de l'art.

Enfin, la mise en oeuvre pratique des modes de réalisation et variantes décrits est à la portée de l'homme du métier à partir des indications fonctionnelles données ci-dessus. En particulier, les dimensions, notamment les épaisseurs, et/ou les niveaux de dopages des diverses couches, portions, bandes des modulateurs des figures 5 et 7 peuvent être déterminées par l'homme du métier en fonction du signal optique à moduler, notamment de sa longueur d'onde et du mode optique considéré, et/ou de la fréquence de modulation visée.

## Revendications

1. Procédé comprenant les étapes successives suivantes :
a) graver une cavité (100) dans une première couche (102) de silicium en laissant en place, au fond de la cavité, une deuxième couche (108) de silicium correspondant à une partie de l'épaisseur de la première couche ;
b) faire croître dans ladite cavité (100), par épitaxie à partir de la deuxième couche (108), une troisième couche (200) de germanium ou de silicium-germanium ;
c) faire croître dans ladite cavité (100), par épitaxie à partir de la troisième couche (200), une quatrième couche (202) de silicium de manière à remplir ladite cavité ;
d) définir par gravure jusqu'à la deuxième couche (108) une première bande (300) dans la quatrième couche (202) et une deuxième bande (302) dans la troisième couche (200), la première bande (300) reposant sur la deuxième bande (302) et ayant une même largeur que la deuxième bande (302) ;
e) graver sélectivement une partie de la deuxième bande (302) de manière à réduire la largeur de la deuxième bande ;
f) remplir d'un isolant (400) des cavités (100L, 100R) disposées de part et d'autre des première (300) et deuxième (302) bandes ;
g) déposer une couche isolante (402) ; et
h) coller, par collage moléculaire, une couche (500) de matériaux III-V sur la couche isolante (402).

2. Procédé selon la revendication 1, dans lequel la gravure de l'étape d) est une gravure anisotrope.

3. Procédé selon la revendication 1 ou 2, dans lequel la gravure de l'étape e) est une gravure isotrope.

4. Procédé selon l'une quelconque des revendications 1 à 3, dans lequel l'étape f) comprend les étapes suivantes :
f1) déposer une couche dudit isolant (400) remplissant lesdites cavités (100L, 100R) ; et
f2) effectuer une planarisation mécano-chimique, CMP, jusqu'à la première couche (102).

5. Procédé selon l'une quelconque des revendications 1 à 4, dans lequel à l'étape h), la couche (500) de matériaux III-V a une épaisseur sensiblement égale, de préférence égale, à celle de la première bande (300).

6. Procédé selon l'une quelconque des revendications 1 à 5, dans lequel la couche (500) de matériaux III-V est en InGaAsP ou en InP, de préférence en InGaAsP.

7. Procédé selon l'une quelconque des revendications 1 à 6, dans lequel la première bande (300), la couche isolante (402) et la couche (500) de matériau III-V forment un modulateur électro-optique capacitif.

8. Procédé selon l'une quelconque des revendications 1 à 7, dans lequel la couche isolante (402) est en HfO₂, Al₂O₃ et/ou en SiO₂, de préférence en Al₂O₃.

9. Procédé selon l'une quelconque des revendications 1 à 8, dans lequel la troisième couche (200) est en silicium-germanium avec une concentration en atomes de germanium comprise entre 10 et 20%.

10. Procédé selon l'une quelconque des revendications 1 à 9, dans lequel la première couche (102) est une couche de type silicium sur isolant, SOI, et repose sur une couche isolante (104).

11. Modulateur électro-optique capacitif comprenant :
une première couche (108) de silicium ;
un empilement d'une première bande (302) de germanium ou de silicium-germanium reposant sur la première couche (108) et d'une deuxième bande (300) de silicium reposant sur la première bande, la première bande étant moins large que la deuxième bande ;
un isolant (400) bordant latéralement l'empilement et affleurant une face supérieure de la deuxième bande (300) ;
une couche isolante (402) reposant sur l'isolant (400) et la deuxième bande (300) ; et
une couche (500) de matériaux III-V reposant sur la couche isolante (402) et comprenant une troisième bande (501) disposée au-dessus et en regard de la deuxième bande (300).

12. Modulateur selon la revendication 11, dans lequel la première bande (300), la troisième bande (501) et une portion de la couche isolante (401) prise entre les première et troisième bandes forment un guide d'onde du modulateur électro-optique.

13. Modulateur selon la revendication 11 ou 12, dans lequel la première couche (108) est une partie de l'épaisseur d'une deuxième couche (102) de silicium d'une structure de silicium sur isolant, SOI, la première couche (108) reposant sur une couche isolante (104) de la structure SOI et la deuxième bande (300) affleurant une face supérieure de la deuxième couche (102).

14. Modulateur selon l'une quelconque des revendications 11 à 13, dans lequel les deuxième (300) et troisième (501) bandes ont une épaisseur sensiblement égale, de préférence égale.

15. Modulateur selon l'une quelconque des revendications 11 à 14, dans lequel :
la première bande (302) est en silicium-germanium avec une concentration en atomes de germanium comprise entre 10 et 20% ; et/ou
la couche (500) de matériaux III-V est en InGaAsP ou en InP, de préférence en InGaAsP ; et/ou
la couche isolante (402) est en HfO₂, Al₂O₃ et/ou en SiO₂, de préférence en Al₂O₃.

## Patentansprüche

1. Ein Verfahren, das die folgenden aufeinanderfolgenden Schritte aufweist:
a) Ätzen eines Hohlraums (100) in einer ersten Siliziumschicht (102), wobei am Boden des Hohlraums eine zweite Siliziumschicht (108), die einem Teil der Dicke der ersten Schicht entspricht, belassen wird
b) Aufwachsen in dem Hohlraum (100) mittels Epitaxie auf der zweiten Schicht (108) einer dritten Germanium- oder Silizium-Germanium-Schicht (200);
c) Aufwachsen in dem Hohlraum (100) mittels Epitaxie auf der dritten Schicht (200) einer vierten Siliziumschicht (202), um den Hohlraum zu füllen;
d) Definieren eines ersten Streifens (300) in der vierten Schicht (202) und eines zweiten Streifens (302) in der dritten Schicht (200) durch Ätzen bis zur zweiten Schicht (108), wobei der erste Streifen (300) auf dem zweiten Streifen (302) liegt und die gleiche Breite aufweist wie der zweite Streifen (302);
e) selektives Ätzen eines Abschnitts des zweiten Streifens (302), um die Breite des zweiten Streifens zu verringern
f) Füllen mit einem Isolator (400) von Hohlräumen (100L, 100R), die auf beiden Seiten des ersten (300) und zweiten (302) Streifens angeordnet sind
g) Abscheiden einer Isolierschicht (402); und
h) Bonden einer Schicht (500) aus III-V-Materialien mit der Isolierschicht (402) mittels molekularem Bonden.

2. Verfahren nach Anspruch 1, wobei das Ätzen im Schritt d) ein anisotropes Ätzen ist.

3. Verfahren nach Anspruch 1 oder 2, wobei das Ätzen im Schritt e) ein isotropes Ätzen ist.

4. Verfahren nach einem der Ansprüche 1 bis 3, wobei Schritt f) die folgenden Schritte aufweist:
f1) Abscheiden einer Schicht des Isolators (400), die die Hohlräume (100L, 100R) füllt; und
f2) Durchführen einer chemisch-mechanischen Planarisierung, CMP, bis hinunter zu der ersten Schicht (102).

5. Verfahren nach einem der Ansprüche 1 bis 4, wobei in Schritt h) die Schicht (500) aus III-V-Materialien eine Dicke aufweist, die im Wesentlichen gleich, vorzugsweise gleich, derjenigen des ersten Streifens (300) ist.

6. Verfahren nach einem der Ansprüche 1 bis 5, wobei die Schicht (500) aus III-V-Materialien aus InGaAsP oder InP, vorzugsweise aus InGaAsP, hergestellt wird.

7. Verfahren nach einem der Ansprüche 1 bis 6, wobei der erste Streifen (300), die Isolierschicht (402) und die Schicht (500) aus III-V-Material einen kapazitiven elektro-optischen Modulator bilden.

8. Verfahren nach einem der Ansprüche 1 bis 7, wobei die Isolierschicht (402) aus HfO₂, Al₂O₃ und/oder SiO₂, vorzugsweise aus Al₂O₃, hergestellt wird.

9. Verfahren nach einem der Ansprüche 1 bis 8, wobei die dritte Schicht (200) aus Silizium-Germanium mit einer Germanium-Atomkonzentration im Bereich von 10 bis 20 % hergestellt ist.

10. Verfahren nach einem der Ansprüche 1 bis 9, wobei die erste Schicht (102) eine Schicht vom Typ Silicon-on-Insulator (Silizium-auf-Isolator), SOI, ist und auf einer Isolierschicht (104) aufliegt.

11. Kapazitiver elektro-optischer Modulator, der Folgendes aufweist:
eine erste Siliziumschicht (108);
einen Stapel aus einem ersten Germanium- oder Silizium-Germanium-Streifen (302), der auf der ersten Schicht (108) ruht, und einem zweiten Silizium-Streifen (300), der auf dem ersten Streifen ruht, wobei der erste Streifen schmaler ist als der zweite Streifen;
einen Isolator (400), der seitlich an den Stapel angrenzt und mit einer oberen Fläche des zweiten Streifens (300) bündig ist;
eine Isolierschicht (402), die auf dem Isolator (400) und dem zweiten Streifen (300) aufliegt; und
eine Schicht (500) aus III-V-Materialien, die auf der Isolierschicht (402) aufliegt und einen dritten Streifen (501) aufweist, der über und gegenüber dem zweiten Streifen (300) angeordnet ist.

12. Modulator nach Anspruch 11, wobei der erste Streifen (300), der dritte Streifen (501) und ein Teil der Isolierschicht (401), der zwischen dem ersten und dem dritten Streifen liegt, einen Wellenleiter des elektro-optischen Modulators bilden.

13. Modulator nach Anspruch 11 oder 12, wobei die erste Schicht (108) ein Teil der Dicke einer zweiten Siliziumschicht (102) einer Silicon-on-Insulator (Silizium-auf-Isolator), SOI-Struktur, ist, wobei die erste Schicht (108) auf einer Isolierschicht (104) der SOI-Struktur aufliegt und der zweite Streifen (300) mit einer Oberseite der zweiten Schicht (102) bündig ist.

14. Modulator nach einem der Ansprüche 11 bis 13, wobei der zweite (300) und der dritte (501) Streifen eine im Wesentlichen gleiche, vorzugsweise gleiche, Dicke aufweisen.

15. Der Modulator nach einem der Ansprüche 11 bis 14, wobei:
der erste Streifen (302) aus Silizium-Germanium mit einer Germanium-Atomkonzentration im Bereich von 10 bis 20 % hergestellt ist; und/oder
die Schicht (500) aus III-V-Materialien aus InGaAsP oder aus InP, vorzugsweise aus InGaAsP, hergestellt ist; und/oder
die Isolierschicht (402) aus HfO₂, Al₂O₃ und/oder aus SiO₂, vorzugsweise aus Al₂O₃, hergestellt ist.

## Claims

1. A method comprising the successive steps of:
a) etching a cavity (100) in a first silicon layer (102) while leaving in place, at the bottom of the cavity, a second silicon layer (108) corresponding to a portion of the thickness of the first layer;
b) growing in said cavity (100), by epitaxy from the second layer (108), a third germanium or silicon-germanium layer (200) ;
c) growing in said cavity (100), by epitaxy from the third layer (200), a fourth silicon layer (202) to fill said cavity;
d) defining by etching all the way to the second layer (108) a first strip (300) in the fourth layer (202) and a second strip (302) in the third layer (200), the first strip (300) resting on the second strip (302) and having a same width as the second strip (302);
e) selectively etching a portion of the second strip (302) to decrease the width of the second strip;
f) filling with an insulator (400) cavities (100L, 100R) arranged on either side of the first (300) and second (302) strips;
g) depositing an insulating layer (402); and
h) bonding, by molecular bonding, a layer (500) of III-V materials to the insulating layer (402).

2. The method of claim 1, wherein the etching of step d) is an anisotropic etching.

3. The method of claim 1 or 2, wherein the etching of step e) is an isotropic etching.

4. The method of any of claims 1 to 3, wherein step f) comprises the steps of:
f1) depositing a layer of said insulator (400) filling said cavities (100L, 100R); and
f2) performing a chemical-mechanical planarization, CMP, down to the first layer (102).

5. The method of any of claims 1 to 4, wherein, at step h), the layer (500) of III-V materials has a thickness substantially equal, preferably equal, to that of the first strip (300).

6. The method of any of claims 1 to 5, wherein the layer (500) of III-V materials is made of InGaAsP or InP, preferably of InGaAsP.

7. The method of any of claims 1 to 6, wherein the first strip (300), the insulating layer (402), and the layer (500) of III-V material form a capacitive electro-optical modulator.

8. The method of any of claims 1 to 7, wherein the insulating layer (402) is made of HfO₂, Al₂O₃ and/or SiO₂, preferably of Al₂O₃.

9. The method of any of claims 1 to 8, wherein the third layer (200) is made of silicon-germanium with a germanium atom concentration in the range from 10 to 20%.

10. The method of any of claims 1 to 9, wherein the first layer (102) is a layer of silicon-on-insulator, SOI, type, and rests on an insulating layer (104).

11. A capacitive electro-optical modulator comprising:
a first silicon layer (108);
a stack of a first germanium or silicon-germanium strip (302) resting on the first layer (108) and of a second silicon strip (300) resting on the first strip, the first strip being narrower than the second strip;
an insulator (400) laterally bordering the stack and flush with an upper surface of the second strip (300);
an insulating layer (402) resting on the insulator (400) and the second strip (300); and
a layer (500) of III-V materials resting on the insulating layer (402) and comprising a third strip (501) arranged above and opposite the second strip (300).

12. The modulator of claim 11, wherein the first strip (300), the third strip (501), and a portion of the insulating layer (401) sandwiched between the first and third strips form a waveguide of the electro-optical modulator.

13. The modulator of claim 11 or 12, wherein the first layer (108) is a portion of the thickness of a second silicon layer (102) of a silicon-on-insulator, SOI, structure, the first layer (108) resting on an insulating layer (104) of the SOI structure and the second strip (300) being flush with an upper surface of the second layer (102) .

14. The modulator of any of claims 11 to 13, wherein the second (300) and third (501) strips have a substantially equal thickness, preferably equal.

15. The modulator of any of claims 11 to 14, wherein: the first strip (302) is made of silicon-germanium with a germanium atom concentration in the range from 10 to 20%; and/or
the layer (500) of III-V materials is made of InGaAsP or of InP, preferably of InGaAsP; and/or
the insulating layer (402) is made of HfO₂, Al₂O₃ and/or of SiO₂, preferably of Al₂O₃.
